# EUROPEAN PATENT APPLICATION

(11) **EP 4 245 481 A1**
(43) Date of publication of application: **20.09.2023**
(21) Application number: 23161593.1
(22) Date of filing: 13.03.2023
(51) Int. Cl.: B25J 13/08

(54) **ROBOTIC DEVICE WITH IMPROVED ROBOTIC JOINT FOR IMPACT AND VIBRATION DETECTION AND RELATED DETECTION METHOD**

(30) Priority: 15.03.2022 IT 202200005036
(71) Applicant: Automationware S.r.l., 30030 Martellago, (VE) (IT)
(72) Inventor: ROSSI, Fabio, I-30030 Martellago, VENEZIA (IT); TASCA, Michele, I-30030 Martellago, VENEZIA (IT)
(74) Representative: Mitola, Marco

(57) **Abstract**

A robotic device (104) comprising at least a first mechanical arm (108), at least a second mechanical arm (112), and a mechanical joint (116) which mechanically and kinematically connects the first mechanical arm (108) and the second mechanical arm (112) to each other, wherein the mechanical joint (116) is operatively connected to electric motor means (120) of the robotic device (104), wherein said mechanical joint (116) is provided with an electronic board (124) having at least one microcontroller (128) for controlling said electric motor means (120). The electronic board (124) is provided with at least one accelerometer (132) capable of evaluating accelerometric variations of the mechanical joint (116) on three axes (X-X, Y-Y, Z-Z) perpendicular to each other. The electronic board (128) is programmed to compare said accelerometric variations of the mechanical joint (116) on three axes (X-X, Y-Y, Z-Z) perpendicular to each other with reference values and to activate emergency stops of the electric motor means (120) if shocks or dynamic malfunctions are detected. The microcontroller (128) is operatively connected to an emergency brake associated with the mechanical joint (116), so as to be able to block the movement of the mechanical joint (116) and of the mechanical arms (108, 112).

## Description

### FIELD OF APPLICATION

The present invention relates to a robotic device comprising an improved robotic joint for detecting impacts and vibrations, and related detection methods.

### PRIOR ART

First, it should be noted that the present invention has applications in different types of robots or robotic devices.

In particular, there are robots for heavy industrial applications that operate in industrial production environments for high lifting/transporting payload applications over 30 kg. These systems are often confined by physical guards or optical barriers that block the robot's movement should people or objects approach the robot's operational area. Accidents on these systems are often due to leaks or load shifts during motion, i.e., during the operation of kinematic execution of the robot.

Then there are robots for light applications: starting in 2010, a series of robots called collaborative robots have entered the market, which may potentially work in the presence of humans, thus even in the absence of physical barriers. In the case of light robotics we refer to ISO 10218 and its evolutions. These robots have force or torque sensors that determine a potential stoppage in the event of an impact with persons and objects, according to the ISO TS 15066 recommendation that describes the impact situations and their applicable forces in each part of the human body. In the case in which they have these devices on board, such robotic devices are called cobots (collaborative robots).

The known solutions have some drawbacks and disadvantages.

In fact, in the market, manufacturers of collaborative robots (cobots) rely only on the direct measurement of the current, such as with Hall sensors or simple or complex current shunts (by processing the current values through analog-to-digital conversion ADC circuits).

Another detection method sometimes used exploits elastomers as torque detectors: the signal from these sensors is used to recognize a probable collision. However, this type of sensor has poor sensitivity, especially at low torque values.

In the case of using current measurement for shock detection, the value of the measured current is proportional to the torque developed by the motor. An increase in the current value thus denotes a higher torque value, which indirectly allows a collision to be detected. This technique requires very complex and potentially slower processing than the solution of the present invention, as further described below.

Moreover, in known collaborative robots, the systems that control the impact are not very sensitive because torque detection is usually implemented through the current measurement of the motor that determines the rotation of the robotic joint. In fact, collaborative robots, to give lightness to the structure (and thus to achieve low inertial loads), are built with lightweight materials and thus have small motors that develop low torque. Therefore, in order to increase the torque value that may be expressed and achieve lifting loads within 25 kg, known solutions have a reducer that on average amplifies the effective torque of the motor while decreasing the speed of rotation by about 100 times. Obviously, in this situation there is a sensitivity-reducing effect on the values of the currents detected, which in fact see potential impacts with sensitivities often exceeding 40 Nm. Some of the known solutions described above are disclosed, for example, by US2021/129330 A1 and US 2021/001484 A1.

### DISCLOSURE OF THE INVENTION

The need to solve the drawbacks and limitations mentioned with reference to the prior art is therefore felt.

This requirement is met by a robotic device comprising a robotic joint for impact and vibration detection in accordance with claim 1 and a method for detecting impacts and vibrations in accordance with claim 11.

### DESCRIPTION OF THE DRAWINGS

Further features and advantages of the present invention will become more apparent from the following detailed description of preferred, non-limiting embodiments thereof, wherein:

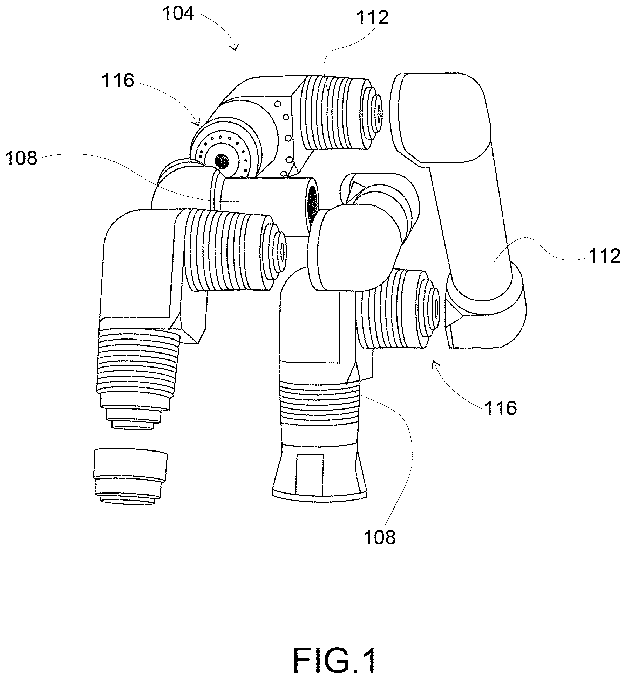

Fig. 1 is a perspective view, partially in exploded view, of a robotic device in accordance with an embodiment of the present invention;

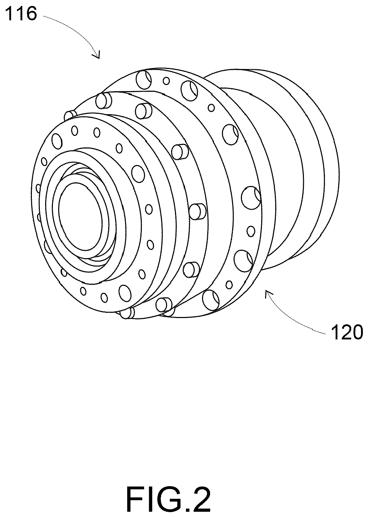

Fig. 2 is a perspective view of a robotic joint of the robotic device in Fig. 1;

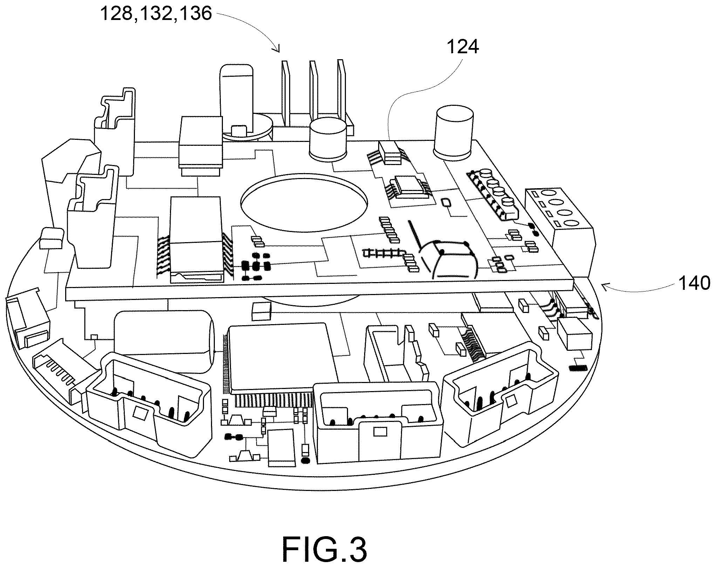

Fig. 3 is a perspective view of the electronic board of the robotic joint in Fig. 2;
Fig. 4 is a graph of the accelerometric variation a of the current change of a robotic joint of the present invention, in the time domain;
Fig. 5 is the flow chart of the algorithm relevant to the detection of shocks by means of processing only signals from the accelerometer (hereafter referred to as Method 1);
Fig. 6 represents the flow chart relevant to the shock detection method by cross-processing data from the accelerometer and current transducers (hereafter referred to as Method 2).

Elements or parts of elements common to the embodiments described hereinafter will be indicated with the same numerical references.

### DETAILED DESCRIPTION

With reference to the aforesaid figures, an overall view of a robotic device is indicated collectively with 104. For the purposes of the present invention, the type of robotic device is not relevant, which, as seen, may be either a robot for industrial applications or a robot for light applications, as in the case of collaborative robots (cobots).

The robotic device 104 comprises at least a first mechanical arm 108 and a second mechanical arm 112.

Said first and second mechanical arms 108, 112 may have any shape and size and may be made of any material.

The robotic device 104 further comprises a mechanical joint 116 that mechanically and kinematically connects the first mechanical arm 108 and the second mechanical arm 112 to each other. For the purposes of the present invention, the mechanical joint 116 may be of any type. For example, the mechanical joint 116 may be a rotational joint configured to allow mutual rotation of the first mechanical arm 108 and the second mechanical arm 112 around at least one of three mutually perpendicular axes X-X, Y-Y, Z-Z.

Non-rotational or translational, roto-translational and similar mechanical joints 116 may be used.

The mechanical joint 116 is operatively connected to electric motor means 120 of the robotic device 104 for the mutual movement of said first and second mechanical arms 108, 112.

The electric motor means 120 may have any size, power, and dimension. Moreover, the electric motor means 120 may be at least partially housed inside the joint or may also be associated externally therewith. Obviously, the electric motor means 120 may also be provided with transmission means for the mechanical connection with the joint 116 and/or the relevant first and second mechanical arms 108, 112.

The mechanical joint 116 is also provided with an electronic board or central unit 124 having at least one microcontroller 128 for controlling said electric motor means 120.

For example, said electronic board 124 is provided with at least one accelerometric sensor 132, in the following also referred to simply as an accelerometer, capable of evaluating accelerometric variations of the mechanical joint 116 in the three axes X-X, Y-Y, Z-Z perpendicular to each other.

In accordance with a possible embodiment, said at least one accelerometric sensor 132 is provided with at least one gyroscope 136, capable of evaluating rotational accelerometric variations of the mechanical joint 116 around said three axes X-X, Y-Y, Z-Z perpendicular to each other.

Preferably, but not necessarily, the electronic board 124 is provided with two microcontrollers 128 for controlling said electric motor means 120, so as to achieve dual control of the operation of the electric motor means 120.

Preferably, said electronic board 124 is programmed to compare the accelerometric variations of the mechanical joint 116 on the three axes X-X, Y-Y, Z-Z perpendicular to each other with reference values and to activate, by means of said at least one microcontroller 128, emergency stops of the electric motor means 120 if shocks or dynamic malfunctions are detected.

In accordance with one embodiment, said microcontroller 128 is programmed so as to acquire the accelerometric data measured by the accelerometric sensor 132 at predetermined intervals as a function of the application or operating speeds of the robotic device 104.

In accordance with a possible embodiment, the at least one microcontroller 128 of the electronic board 124 is operatively connected to an emergency brake (not shown) associated with the mechanical joint 116, so as to be able to block the movement of the mechanical joint 116 and of the mechanical arms 108, 112 connected thereto, when operated by the microcontroller 128.

In accordance with a possible embodiment, the electronic board 124 is provided with a detection system of the current absorbed by said electric motor means 120.

For example, said detection system 140 comprises a 12-bit ADC (Analog to Digital Converter), which enables sensitivity up to 1 Nm to be achieved. In the following, the detection system 140 of the absorbed current will also be called a current transducer for simplicity.

In accordance with an embodiment, said at least one microcontroller 128 is programmed to perform control operations on the data detected by the accelerometric sensors 132 and comparison operations with the current absorption measurement for the evaluation of the torque of the electric motor means 120 which is performed by the system 140 for detecting the absorbed current.

For example, the at least one microcontroller 128 is programmed to perform said operations on the data detected by the accelerometric sensors 132 and comparison operations with the current absorption measurement by sending information on the (average) current values with a frequency comprised between 0.5 ms and 1.5 ms, preferably every millisecond, with the central control master of the robotic joints. At the same time, due to the ADC device, which is internal to the microprocessor, acquisition packets from the three channels of the accelerometer will be controlled to detect any significant variations so as to show any impact. In the 1-millisecond window, the average accelerometric value on acquired packets of 100 us (10 samples per millisecond) will be transferred to the micro. A firmware-derived algorithm will check that, for each channel acquired, the individual packet does not exceed in average value the previous one based on a percentage threshold previously programmed by the master (percentage threshold programmable according to application needs, with three sensitivity levels low-med-high) . The set percentage will be adjustable by configuration to achieve 3 levels of sensitivity (optionally also digital control of the predetermined values).

In addition to the information provided by the accelerometric device alone, it is possible to evaluate also the information provided by current sensors in order to recognize an impact.

Hereinafter a possible implementation of shock detection algorithms in accordance with a possible embodiment of the present invention is provided.

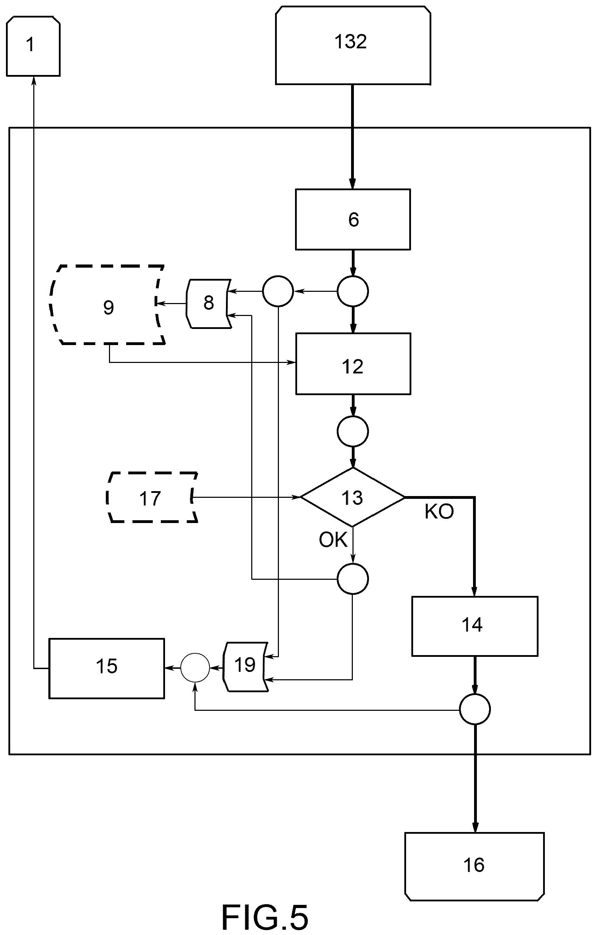

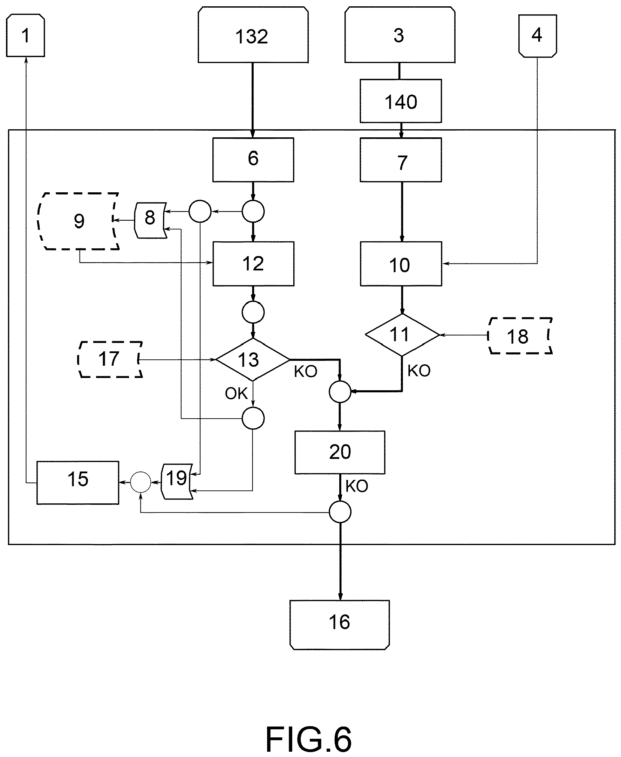

The functional blocks that form the algorithms covered by the present invention are contained within the areas of each flow chart (Fig. 5 and 6) and are described hereinafter.

The following part begins with a description of the functional blocks depicted in (Fig. 5 and 6), namely:
1) Communication bus 1 to the central unit 124, to communicate both an acceleration value anomaly of at least one of said mechanical arms 108, 112 and/or of the mechanical joint 116 and the intervention of the brake: the type of bus and communication protocol may be, for example, but not exclusively, Ethercat with FSOE protocol
132) Accelerometer
3) Current transducer
4) Communication bus from the central unit 124 for the expected current values of the electric motor 120: the type of bus 4 and communication protocol may be, for example, but not exclusively, Ethercat with FSOE protocol.
140) 12-bit ADC converter of the signal from the current transducer (current value)
6) Calculation of the average value of the last 10 values transmitted by the accelerometer 132
7) Filter block which performs a filtering operation on the data coming from the ADC converter 140 and generates a current value
8) Software block which updates in the first internal memory (9) of the microprocessor 18 the average value of the last 10 acceleration samples (values), if the block (13) detects that this value is within the thresholds set in the second internal memory (17)
9) First internal memory of the microprocessor 18 containing the average value of the last 10 samples (values) transmitted by the accelerometer 132
10) Block which compares the value generated by the filter block (7) with the expected value received from the communication bus (4) and calculates the difference between the value of the filter block and the value of the communication bus (4)
11) Block which compares the deviation between the value calculated by the block (10) with the limits in the internal memory of the microprocessor (18)
12) Block which calculates the difference between the value calculated by the block (6) and the value stored in the first internal memory of the microprocessor (9)
13) Block which compares the value calculated by the block (12) with the limits in the second internal memory (17)
14) Block which generates an external command to cut off power to the motor 120 and activate the brake via the external circuit (16) if it receives a shock detection signal as input: the block (14) also sends, over the communication bus to the outside (1), the information if shocks are detected.
15) Block which sends information about the detected acceleration over the communication bus (1) (optional)
16) External circuit for removing power to the motor 120 and activating the brake
17) Internal memory containing the limits for acceleration: values are programmable according to the application
18) Internal memory containing the limits for the current deviation: the values are programmable according to the application.
19) Block that optionally sends to the central unit, via the block (15), the new average value of the last 10 values of the accelerations for each of the axes X-X, Y-Y, Z-Z, as calculated by the block (6)
20) Block which generates an external command to cut off power to the motor and activate the brake via the external circuit (16) if it receives as input a shock detection signal from the block (13) and the block (11): the block (20) also sends, over the communication bus to the outside (1), the information if shocks are detected via the communication block (15).

The following will describe some possible algorithms for determining impacts.

In particular, the following describes a possible implementation of algorithms that achieve shock detection by processing signals from the accelerometric device and optionally from the current transducer.

At least two methods are possible, namely:
**1)** the determination of a shock by processing only data from the accelerometric device 132 (Method 1)
2) the determination of a shock by combined processing of data from the accelerometric device 132 and the current transducer 140 (Method 2)

### Description of Method 1)

Shock detection by processing only the signals from the accelerometer.

During normal operation of the robotic device 104, the block 6 receives data from the accelerometer 132 with a frequency that may be programmed according to the application and calculates the average acceleration value over a set of 10 values, for each axis X-X, Y-Y, Z-Z. Optionally, the block 6 may also calculate the average value of the data relevant to the gyroscope on the three axes X-X, Y- Y, Z-Z. An internal memory block of the microprocessor 18 contains for each axis the respective average values calculated in the previous iteration. The block 12 compares the average values calculated by the block 6 with the values stored in the internal memory 9 and calculates the deviation (value of (6) - value of (9)) for each axis.

For each axis X-X, Y-Y and Z-Z, the values calculated by the block 12 are compared by the block 13 with the respective limits stored in the internal memory 17.

If the value of the comparison performed by the block 13 is within the limits stored in the internal memory 17 through the block 8, the value stored in the internal memory 9 is updated: in this way the average of the last 10 values transmitted by the accelerometer 132 becomes the new reference of the accelerometric data. Optionally, if the value of the comparison instead exceeds the limits for at least one of the axes X-X, Y-Y, Z-Z, the block 14 is activated, which generates the command to cut power to the motor and activate the brake block via the external circuit 16; the block 14 optionally may send, via the communication block 15, the information that an impact occurred to the central unit via the communication bus 1.

### Description of the Method 2)

Shock detection by cross-processing the data from the accelerometer and from the current transducers

During the movement of the arms 108, 112, the central unit 124 sends the expected current value to each mechanical joint 116 via the communication bus 4.

The block 5 receives the actual instantaneous value of the current from the transducer circuit 3. The converter 140 (12-bit ADC) converts the analog signal from the transducer into a digital signal.

The block 7 prefilters the value received from the block 5 to eliminate impulsive spikes due to electric noise. The block 10 calculates the difference between the filtered value generated by the block 7 and the reference value of the current (expected value) sent from the central unit 124 via the input bus 4. The block 11 compares the value calculated by the block 10 with the thresholds of the current limit stored in the internal memory 18. If the value calculated by the block 10 exceeds the limits stored in the internal memory 18, the block 11 sends the information to the block 20.

With reference to the operation of the algorithm relevant to method 1), if the conditions are met, the block 13 sends a signal of possible shock to the block 20 - signal KO.

Obviously other firmware embodiments of the functional block 20 are also possible; for example, such a block could command the external circuit 16 driving the electric motors 120 to slow down as long as the signal from the block 11 does not also detect an anomaly in the current variation, and command a stop of the motion when the current variation is also detected as abnormal by the block 11.

Depending on the application, a possible embodiment of the block 20 could instead cause the joint or robotic device to slow down if the current change turns out to exceed the set thresholds, while blocking the motion will require that the variation determined by the data from the accelerometer also exceeds the predefined limits. Such examples of possible embodiments are not described in this paper but will be easily derived and implemented by persons skilled in the art.

The operation of a robotic device in accordance with the present invention will now be described according to the algorithm for processing only data from the accelerometric device (Method 1).

In particular, the method for detecting impacts and vibrations of the robotic device 104 described above comprises the steps of:
acquiring the acceleration values of the mechanical joint 16 on said three axes X-X, Y-Y, Z-Z perpendicular to each other, according to a sampling frequency,
evaluating the accelerometric variations of the mechanical joint 116 and comparing them with reference values so as to detect the occurrence of shocks or malfunctions of the robotic device 104. The use of accelerometric technology involves a calibration procedure with payload to detect the behavior of the robot based on the gripper and payload used in the application. This procedure will make it possible to define what level of sensitivity should be applied for the specific case (Low - Med - High). Obviously, the sensitivity will be higher in the case of low payloads, but still adjustable even beyond the predefined thresholds. In particular, data from the accelerometric sensor 132 are handled by at least one microcontroller 128 that is assigned verification tasks on the previously mentioned functions.

In accordance with a general embodiment, the control method comprises the steps of:
providing an emergency brake associated with the mechanical joint 116,
blocking the movement of the mechanical joint 16 and of the mechanical arms 108, 112 connected thereto by means of said emergency brake, when the occurrence of a shock or a malfunction of the robotic device 104 is detected.

The accelerometric data may be transmitted, via fast serial communication buses that ensure data security, onto external systems for the kinematic control of the system.

It may also be arranged for said accelerometric data to be inserted into an internal memory matrix for activating applications and/or rapid feedback following impacts or kinematic evolutions also processed on significant samples.

It is also possible to include a phase for detecting the current absorbed by said electric motor means 120 for the evaluation of the torque provided by said electric motor means 120. In particular, the value of absorbed current may be compared with a reference current value in order to identify any critical issues if this reference value is exceeded.

A possible embodiment of an algorithm that combines data from the accelerometric device and current sensors is represented by the flowchart in Fig. 6 and corresponds to the description of the algorithm defined as Method 2, described above.

It is therefore possible to envisage the steps of:
detecting and evaluating the accelerometric data provided by the accelerometric sensors 132,
detecting and evaluating the electric current absorbed by the electric motor means 120,
cross-processing the acceleration data of the accelerometric sensors 132 and the data of the electric current absorbed by the electric motor means 120 in order to establish the occurrence of a shock or a malfunction of the robotic device 104.

The detections of the accelerometric data and the absorbed current data are preferably carried out with a frequency comprised between 0.5 and 1.5 milliseconds, preferably every millisecond, by the master, while in the robotic joint, sampling may be as high as 100 ks/second. The operating technique involves detecting current/force values below Nm by using the highly sensitive ADC technique. Also in this case, impulsive current variations will cause the accelerometric values to be checked immediately for maximum evolutions within the limits of the programmed values (min-med-high) . The same thing will be done if the accelerometric value exceeds the set threshold, to check the current/torque variations if they exceed the set limits.

A further possible implementation of an algorithm to determine impacts may include the evaluation of data from torque sensors, which may be used in those embodiments in which this method ensures sufficient sensitivity and accuracy.

This type of algorithm is not described in the present paper but may be easily derived by analogy from the algorithms previously described as Method 1 and Method 2.

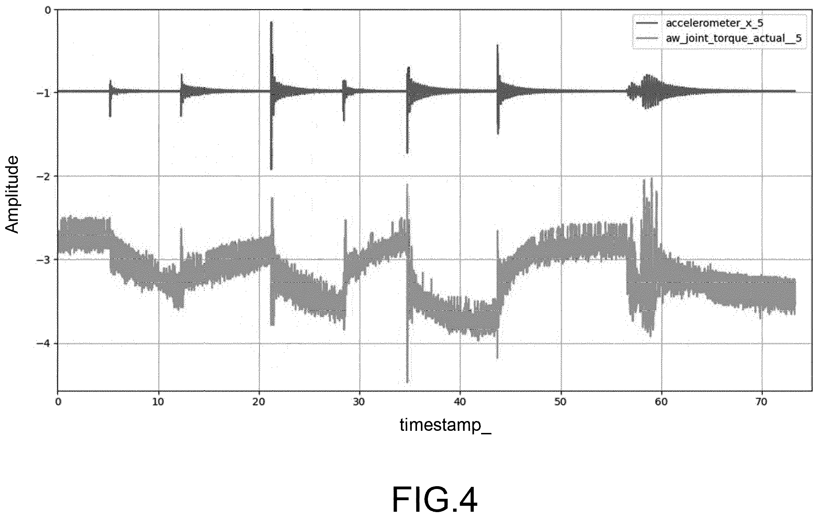

Fig. 4 shows a comparison of the accelerometric variations detected by the accelerometric sensors and the variations in current absorbed by the motor detected by the detection systems 140 in a same robotic device 104: it is evident how, for the operation of the same mechanical joint 116, the accelerometric variations are much sharper and better identifiable than the current variations. In particular, the sensitivity of the accelerometer with respect to the signal base is very high.

As seen, safety-related control actions to block the mechanical joint 116 in case of impact/collision with objects or persons are assigned to the firmware of the electronic board 124, which is integrated into the robotic device 104.

Therefore, due to the computational capabilities of the robotic device 104, it is possible, through the emergency brake (e.g., electromagnetic type), to block the operation of the mechanical joint 116 and the overall system.

Thus, the present invention may have several applications, for example directly in the robotic joint where the device is installed, in order to ensure:
controlling for accidental impact with persons or things,
controlling for any vibrations or oscillations in the system,
controlling for excessive accelerometric variations due to unpredictable kinematic effects.

There may also be indirect applications, by sending data over a serial link bus to a master management system, such as:
feedback on the central master system for collaborative management,
accelerometric data transfer over the connection bus of the robotic system,
data transfer over serial bus for forwarding to other robotic joints (for example, applications in exoskeletons).

As may be appreciated from that which has been described, the present invention overcomes the drawbacks of the prior art.

In particular, the present invention may be integrated into robots for both heavy industrial and light industrial applications, outlining an important technological innovation for the prevention of impact risks in the workplace.

In the case of heavy robotics, the application on a robotic arm allows the detection of vibrations or accelerations exceeding the values predicted by the kinematics of the system.

However, the robot will have to maintain relatively modest movement speeds still imposed by regulations in force. Thus, if programmed within the allowable Cartesian speed limits, the invention allows the robot to be blocked through an Ethercat communication bus, for example provided with FSoE diagnostics.

In the case of light or collaborative robotics, a number of variations are possible that increase the ability to activate an emergency block, caused by impact, in addition to the already active systems for torque/force control built into robots/robotic joints of the prior art.

With respect to traditional industrial robotics, where humans and robots typically perform different tasks separately, modern approaches to collaborative robotics allow them to share the same workspace and tasks. In such scenarios, as humans and robots may coexist or collaborate in a shared workspace, safety becomes a crucial issue. The current safety standards for robots for collaborative operations define four modes of operation that, when used individually or in combination, may make the robotic application collaborative (see, for example, ISO/TS 15066:2016):
controlled safety stop,
manual guidance,
speed and separation control,
limitation of power and force.

In addition to the first two methods, the third and fourth methods are also desirable to enable wide exploitation of the benefits derived from the human-robot collaboration. The standards pay close attention to the speed monitoring and controlled separation methods, allowing close coexistence to be achieved in the application with the robot, by applying power and force limitation in case of accidental contact with persons or objects.

Therefore, the present invention allows compliance with safety regulations even in the case of collaborative robotics.

The present invention relates to a robotic device capable of measuring Cartesian acceleration in order to detect abnormal behavior, impacts, or excess vibrations. The application of the device covered by the invention finds its greatest use, as seen, in the area of collaborative robotics, while the application in other areas of automation systems still provides advantages over traditional solutions.

In fact, with respect to the known solutions employing only direct current measurement with simple or complex Hall sensors or current shunts, the present invention is simpler and faster, as well as more accurate in its ability to discriminate a vibration from an actual shock.

In contrast to the traditional methodology that relies on impact control only on the force measurement on the robotic joint, which is detected by a technique for measuring the current variation in each phase of the motor, the device covered by the present invention also uses for this purpose the detection of any Cartesian accelerometric variation above the limits programmed in the control board of the joint.

The device allows a signal proportional to the intensity of the acceleration (impact) that has higher dynamics and consequently higher sensitivity to be exploited. This is because, in traditional methodology, due to the high transmission ratio of the speed reducer (typically 100:1), the dynamics of the signal relevant to the current value are reduced accordingly, while the proposed accelerometric system provides a signal that is not influenced by this speed reducer.

The present invention also achieves the combination of traditional technology, using a 12-Bit ADC (Analog to Digital Converter) that enables improved current measurement and achieves a sensitivity up to 1 Nm, while adding a complementary method based on the Cartesian accelerometric measurement that improves the overall perception in the joint and adds kinematic information not perceptible by current measurement alone, even if very sensitive.

Moreover, the information detected by the 3D accelerometric system allows:
real-time feedback of the robot's actual performance in motion, or during the gravity compensation function,
timely information of the accelerometric data collected during the manual movement of the collaborative robot (cobot).

The present invention opens a new scenario for the implementation of robotic joints capable of determining real-time feedback on real conditions of the movements, which is essential not only for the construction of next-generation robots, but also for actuator applications for the construction of exoskeletons or humanoid machines or the like, to be able to exert active control over predicted but modifiable movements based on environmental conditions.

Furthermore, the mechatronic device of the present invention combines the perception devices with a number of other functions already established in the world of robotics, such as, for example, encoders controlling the fast and slow axes, which must be monitored to determine with precision the evolutions in speed, accelerations, and decelerations of the system. Also in this case, the invention allows precise feedback on rotations, avoiding potential oscillations/vibrations due to uncontrolled trajectories of the robot, often due to excessive loads or in the phase of being detached from the tool.

The device of the present invention introduces a new application solution as it makes it possible, through accelerometric detection, to:
perceive even very small impacts due to accidental collisions (under 1 Nm),
control variations in Cartesian accelerations above the limits imposed by kinematics,
block speeds not allowed by regulations regarding collaborative robotics,
reveal vibrations caused by any mechanical malfunctions,
increase the sensitivity to impact due to the absence of mechanical filters (reducer) that inhibit the sensitivity of force variations that is the basis of the operating block of collaborative robots.

In addition, the proposed solution adds an additional advantageous benefit in the case of "a gravity compensation system." In fact, through the combination of the accelerometric detection system combined with the torque measurement detected in the electronic board mounted on the robotic joint, a redundant architecture is achieved that will provide a better understanding of the impulsive variations in torque and thus current on the motor, comparing the accelerometric data in particular when the impulsive variations in acceleration are synchronous.

It is, moreover, verified by laboratory tests that the values detected by the accelerometers have a sensitivity and speed of identification which is much more evident than the methods determined by current measurement.

A person skilled in the art, for the purpose of satisfying contingent and specific needs, may make numerous modifications and variations to the solutions described above.

The scope of protection of the invention is defined by the following claims.

## Claims

1. A robotic device (104) comprising:
- at least a first mechanical arm (108),
- at least a second mechanical arm (112),
- a mechanical joint (116) which mechanically and kinematically connects the first mechanical arm (108) and the second mechanical arm (112) to each other,
- wherein the mechanical joint (116) is operatively connected to electric motor means (120) of the robotic device (104) for the mutual movement of said first and second mechanical arm (108,112),
- wherein said mechanical joint (116) is provided with an electronic board (124) having at least one microcontroller (128) for controlling said electric motor means (120),
- wherein said electronic board (124) is provided with at least one accelerometric sensor (132) capable of evaluating accelerometric variations of the mechanical joint (116) on three axes (X-X,Y-Y,Z-Z) perpendicular to each other,
- wherein said electronic board (124) is programmed to compare said accelerometric variations of the mechanical joint (116) on three axes (X-X, Y-Y, Z-Z) perpendicular to each other with reference values and to activate, by means of said at least one microcontroller (128), emergency stops of the electric motor means (120) if shocks or dynamic malfunctions are detected,
wherein said at least one microcontroller (128) of the electronic board (124) is operatively connected to an emergency brake associated with the mechanical joint (116), so that it may block the movement of the mechanical joint (116) and the mechanical arms (108, 112) connected thereto when actuated by the microcontroller (128).

2. The robotic device (104) according to claim 1, wherein the electronic board (124) is programmed to:
- receive the data measured by the accelerometric sensor (132) with a frequency programmable according to the application and calculate the average acceleration value over a set of 10 values, for each axis (X-X), (Y-Y), (Z-Z),
- store, for each axis (X-X), (Y-Y), (Z-Z), the respective average values calculated in the previous iteration,
- compare the calculated average acceleration values with said stored values and calculate, for each axis (X-X), (Y-Y), (Z-Z), the relevant deviation,
- if the value of the deviation is within predetermined limits stored in an internal memory (17), the average of the last 10 values transmitted by the accelerometric sensor (132) becomes the new stored value of the accelerometer data,
- if the value of the deviation exceeds the limits for at least one of the axes (X-X), (Y-Y), (Z-Z), power is to the electric motor means (120) is cut off and/or a brake is activated for mechanically blocking the arms (108,112) and/or the mechanical joint (116).

3. The robotic device (104) according to claim 1 or 2, wherein said at least one accelerometric sensor (132) is provided with at least one gyroscope (136) capable of evaluating accelerometric rotation variations of the mechanical joint (116) around said three axes (X-X,Y-Y,Z-Z) perpendicular to each other.

4. The robotic device (104) according to claim 1, 2 or 3, wherein said electronic board (124) is provided with two microcontrollers (128) for controlling said electric motor means (120), so as to achieve dual control of the operation of the electric motor means (120).

5. The robotic device (104) according to any one of claims 1 to 4, wherein said microcontroller (128) is programmed so as to acquire the accelerometric data measured by the accelerometric sensor (132) at predetermined intervals as a function of the application or operating speeds of the robotic device (104).

6. The robotic device (104) according to any one of claims 1 to 5, wherein the electronic board (124) is provided with a system (140) for detecting the current absorbed by said electric motor means (120), wherein said at least one microcontroller (128) is programmed to perform control operations on the data detected by the accelerometric sensors (132) and comparison operations with the measurement of the absorbed current for evaluating the torque of the electric motor means (120) which is performed by the system (140) for detecting the absorbed current, wherein said detection system (140) comprises an ADC (Analog to Digital Converter), preferably a 12-bit ADC.

7. The robotic device (104) according to claim 6, wherein the at least one microcontroller (128) is programmed to perform said control operations on the data detected by the accelerometric sensors (132) and comparison operations with the measurement of absorbed current with a frequency comprised between 0.5 and 1.5 milliseconds, preferably 1 millisecond.

8. The robotic device (104) according to claim 6 or 7, wherein the electronic board (124) is programmed to:
- receive and store the expected value of supply current of the electric motor means (120) of said mechanical joint (116),
- acquire the actual instantaneous value of the supply current of the electric motor means (120) and convert it, by means of the converter 140 (ADC), into a digital signal,
- prefilter said digital signal to eliminate impulsive spikes due to electric noise,
- calculate the difference between the filtered value and the expected value of the current and compare it with a predetermined limit value,
- send a block signal to the electric motor means (120) and/or brakes operatively connected to the arms (108,112) and/or to the mechanical joint (116) if said predetermined current limit value is exceeded.

9. The robotic device (104) according to any one of claims 6 to 8 in combination with any one of claims 2 to 5, wherein the electronic board (124) is programmed to:
- command a slowdown of the means of the mechanical joint electric motors (120) when the value of the deviation exceeds the limits for at least one of the axes (X-X), (Y-Y), (Z-Z), but the predetermined current limit value is not detected as being exceeded,
- command a block of the electric motors (120) when the deviation value exceeds the limits for at least one of the axes (X-X), (Y-Y), (Z-Z), and also the predetermined current limit value is detected as being exceeded.

10. The robotic device (104) according to any one of claims 6 to 8 in combination with any one of claims 2 to 5, wherein the electronic board (124) is programmed to:
- command a slowdown of the electric motors (120) when the predetermined current limit value is detected as being exceeded, but the deviation value does not exceed the limits for at least one of the axes (X-X), (Y-Y), (Z-Z),
- command a block of the electric motors (120) when the predetermined current limit value is detected as being exceeded and the deviation value exceeds the limits for at least one of the axes (X-X), (Y-Y), (Z-Z).

11. A method for detecting impacts and vibrations of a robotic device (104) according to any one of claims 1 to 10, comprising the steps of:
- acquiring the values of accelerations of the mechanical joint (116) on said three axes (X-X, Y-Y) perpendicular to each other, according to a sampling rate programmable according to the application and calculating the average acceleration value over a set of 10 values, for each axis (X-X), (Y-Y), (Z-Z),
- storing, for each axis (X-X), (Y-Y), (Z-Z), the respective average values calculated in the previous iteration,
- comparing the calculated average acceleration values with said stored values and calculating, for each axis (X-X), (Y-Y), (Z-Z), the relevant deviation,
- if the value of the deviation is within predetermined limits stored in an internal memory (17), the average of the last 10 values transmitted by the accelerometer (132) becomes the new stored value of the accelerometric data,
- if the value of the deviation exceeds the limits for at least one of the axes (X-X), (Y-Y), (Z-Z), power to the electric motor means (120) is cut off and/or a brake is activated to block the arms (108,112) and/or the mechanical joint (116) mechanically.

12. The method for detecting impacts and vibrations of a robotic device (104) according to claim 11, comprising the steps of:
- providing the electronic board (124) with a system (140) for detecting the current absorbed by said electric motor means (120), wherein said at least one microcontroller (128) is programmed to perform control operations on the data detected by the accelerometric sensors (132) and comparison operations with the current absorption measurement for the evaluation of the torque of the electric motor means (120) that is performed by the system (140) for detecting the absorbed current, wherein said detection system (140) comprises an ADC (Analog to Digital Converter),
- receiving and storing the expected value of supply current of the electric motor means (120) of said mechanical joint (116),
- acquiring the actual instantaneous value of the supply current and converting it, by means of the ADC converter (140), into a digital signal,
- prefiltering said digital signal to eliminate impulsive spikes due to electric noise,
- calculating the difference between the filtered value and the expected value of the current and comparing it with a predetermined limit value,
- if said predetermined current limit value is exceeded, sending a block signal to the electric motor means (120) and/or brakes operatively connected to the arms (108,112) and/or mechanical coupling (116).

13. The method for detecting impacts and vibrations of a robotic device (104) according to claim 12, comprising the steps of:
- commanding a slowdown of the electric motors (120) when the deviation value exceeds the limits for at least one of the axes (X-X), (Y-Y), (Z-Z), but the predetermined current limit value is not detected as being exceeded,
- commanding a block of the electric motors (120) when the deviation value exceeds the limits for at least one of the axes (X-X), (Y-Y), (Z-Z), and the predetermined current limit value is detected as being exceeded.

14. The method for detecting impacts and vibrations of a robotic device (104) according to claim 12, comprising the steps of:
- commanding a slowdown of the electric motors (120) when the predetermined current limit value is detected as being exceeded, but the deviation value does not exceed the limits for at least one of the axes (X-X), (Y-Y), (Z-Z),
- commanding a block of the electric motors (120) when the predetermined current limit value is detected as being exceeded and the deviation value exceeds the limits for at least one of the axes (X-X), (Y-Y), (Z-Z).

15. The method for detecting impacts and vibrations of a robotic device (104) according to claim 11, 12, 13 or 14, wherein the detections of the accelerometric data and the absorbed electric current data are carried out with a sampling frequency comprised between 0.5 and 1.5 milliseconds, preferably 1 millisecond.
